# EUROPEAN PATENT APPLICATION

(11) **EP 4 841 179 A1**
(43) Date of publication of application: **18.11.2026**
(21) Application number: 26155926.4
(22) Date of filing: 03.02.2026
(51) Int. Cl.: F24H 1/00, B60H 1/22, H05B 3/00

(54) **HIGH-VOLTAGE LIQUID NANO-CERAMIC ELECTRIC HEATER FOR AUTOMOBILE**

(30) Priority: 13.05.2025 CN 202510613481
(71) Applicant: Dongguan Sharing Electronics Co., Ltd., Dongguan City, Guangdong Province 523991 (CN)
(72) Inventor: WU, Xiang, Dongguan City (CN); E, Xingang, Dongguan City (CN); WU, Laisheng, Dongguan City (CN); LI, Qing, Dongguan City (CN)
(74) Representative: Chung, Hoi Kan

(57) **Abstract**

This disclosure discloses a high-voltage liquid nano-ceramic electric heater for an automobile, including a housing, where symmetrically arranged heating bodies are arranged at a bottom inside the housing, a circular tube is arranged inside each heating body, one end of each heating body is connected to the housing, a first sealing ring is arranged at a joint between the housing and the heating body, an integrated controller electrically connected to the heating body is arranged inside the housing, an insulating heat-conducting sheet for heat dissipation is arranged on the integrated controller, a first pressing block for fixing the heating body is arranged on the housing, and a second pressing block is arranged at a top opening inside the housing.

## Description

### TECHNICAL FIELD

This disclosure relates to the technical field of ceramic heaters, and in particular, to a high-voltage liquid nano-ceramic electric heater for an automobile.

### BACKGROUND

Energy vehicles have become the trend of future automotive development. Different from traditional fuel vehicles, new energy vehicles are not equipped with engines, which results in a problem of in-vehicle heating. A ceramic heater is a type of heater with uniform and efficient heat distribution, and made of a metal alloy with excellent thermal conductivity, which ensures uniform temperature on a heating surface and eliminates hot spots and cold spots of the equipment.

Ceramic heaters are the optimal choice for hot air in the new energy vehicles. Especially in northern regions, the lack of warm air in vehicles in winter will cause great discomfort to drivers and passengers. A single heater is characterized by low heating efficiency, as well as a complicated structure and a high cost.

At present, no effective solution has yet been proposed to address the relevant technical problems.

### SUMMARY

In view of the problems in the related art, this disclosure provides a high-voltage liquid nano-ceramic electric heater for an automobile, so as to overcome the above technical problems in the prior art.

To this end, a technical solution adopted by this disclosure is as follows:
a high-voltage liquid nano-ceramic electric heater for an automobile, including a housing, where symmetrically arranged heating bodies are arranged at a bottom inside the housing, a circular tube is arranged inside each heating body, one end of each heating body is connected to the housing, a first sealing ring is arranged at a joint between the housing and the heating body, an integrated controller electrically connected to the heating body is arranged inside the housing, an insulating heat-conducting sheet for heat dissipation is arranged on the integrated controller, a first pressing block for fixing the heating body is arranged on the housing, a second pressing block is arranged at a top opening inside the housing, a second sealing ring is arranged at the bottom of the second pressing block, a low-voltage connector and a high-voltage connector are respectively arranged on one side of the housing and above the second pressing block, a waterproof and breathable valve is arranged on a side portion of the housing, a temperature sensor is arranged inside the housing and above the heating body, and a cover plate is arranged on both the top and one side of the housing.

Preferably, the heating body includes a ceramic tube, a flange plate is arranged at an end portion of the ceramic tube, a positioning member is arranged on the flange plate, a sealing member for sealing is arranged on the positioning member, and an electrode connected to the integrated controller is arranged on the ceramic tube.

Preferably, a temperature-sensitive substrate is sleeved on an outer surface of the ceramic tube, a heating substrate is sleeved on an outer surface of the temperature-sensitive substrate, and surfaces of both the temperature-sensitive substrate and the heating substrate are printed with tungsten slurry or other metals.

Preferably, the circular tube is located in a stainless steel circular tube, fixing pieces for fixing are arranged at both ends of the circular tube, and the fixing pieces are of a quincunx-shaped structure.

Preferably, a water channel for accommodating the heating body is arranged inside the housing, a mounting hole matched with the second pressing block is arranged at a top opening of the water channel, and the second pressing block is connected to the water channel through a bolt.

Preferably, a blind hole for the temperature sensor to extend into is formed at the top of the water channel, and a reinforcing rib is arranged on the housing.

Beneficial effects of this disclosure are as follows: the liquid flows rapidly over a surface of the heating body when passing through the water channel, achieving efficient heat exchange; a blind hole is arranged on the water channel for placing a temperature sensor, and a liquid temperature and the heating body are collected; a reinforcing rib can reduce noise generated by liquid circulation; and
the arrangement of a waterproof and breathable valve can release pressure generated during operation of the heater.

### BRIEF DESCRIPTION OF THE DRAWINGS

To describe the technical solutions in the embodiments of this disclosure or in the prior art more clearly, the following briefly introduces the accompanying drawings required for describing the embodiments. Apparently, the accompanying drawings in the following description show merely some embodiments of this disclosure, and a person of ordinary skill in the art may still derive other drawings from these accompanying drawings without creative efforts.
FIG. 1 is a schematic structural diagram of a high-voltage liquid nano-ceramic electric heater for an automobile according to an embodiment of this disclosure;
FIG. 2 is an exploded view of a high-voltage liquid nano-ceramic electric heater for an automobile according to an embodiment of this disclosure;
FIG. 3 is an exploded view of a heating body in a high-voltage liquid nano-ceramic electric heater for an automobile according to an embodiment of this disclosure;
FIG. 4 is a schematic structural diagram of a circular tube in a high-voltage liquid nano-ceramic electric heater for an automobile according to an embodiment of this disclosure;
FIG. 5 is a schematic structural diagram of a mounting hole in a high-voltage liquid nano-ceramic electric heater for an automobile according to an embodiment of this disclosure;
FIG. 6 is a schematic structural diagram of a blind hole in a high-voltage liquid nano-ceramic electric heater for an automobile according to an embodiment of this disclosure;
FIG. 7 is a side view of a water channel in a high-voltage liquid nano-ceramic electric heater for an automobile according to an embodiment of this disclosure; and
FIG. 8 is an operation schematic view according to an embodiment of this disclosure.

In the figures:
1. housing; 2. heating body; 3. circular tube; 4. first sealing ring; 5. integrated controller; 6. insulating heat-conducting sheet; 7. first pressing block; 8. second pressing block; 9. second sealing ring; 10. low-voltage connector; 11. high-voltage connector; 12. waterproof and breathable valve; 13. temperature sensor; 14. cover plate; 15. flange plate; 16. positioning member; 17. sealing member; 18. electrode; 19. temperature-sensitive substrate; 20. heating substrate; 21. ceramic tube; 22. fixing piece; 23. water channel; 24. mounting hole; 25. blind hole.

### DETAILED DESCRIPTION OF THE EMBODIMENTS

To further illustrate the various embodiments, this disclosure is provided with accompanying drawings. These accompanying drawings are a part of the disclosed content of this disclosure, which are mainly used to illustrate the embodiments and can be explained in conjunction with the relevant descriptions in the specification to explain operation principles of the embodiments. With reference to these contents, those of ordinary skill in the art should be able to understand other possible implementations as well as the advantages of this disclosure. Assemblies in the figures are not drawn to scale, and similar assembly symbols are commonly used to represent to similar assemblies.

According to an embodiment of this disclosure, a high-voltage liquid nano-ceramic electric heater for an automobile is provided.

### Embodiment I:

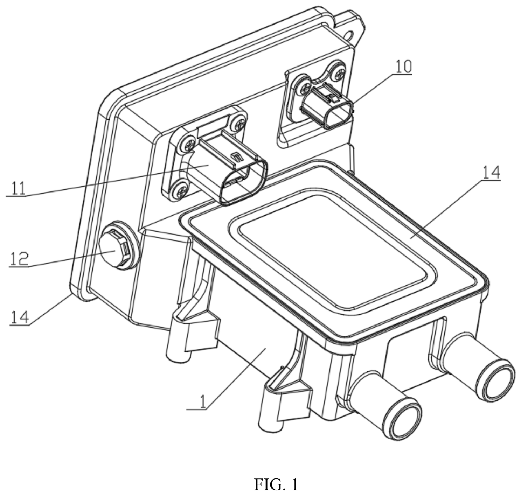

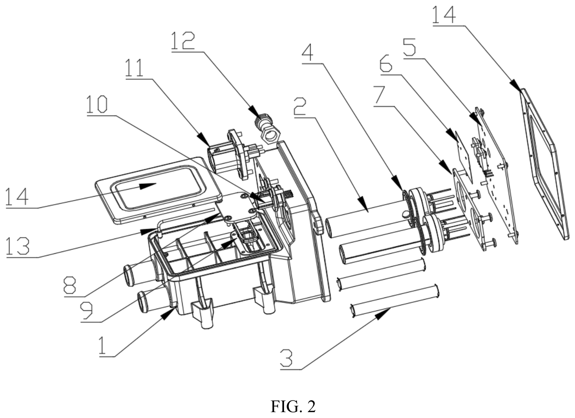

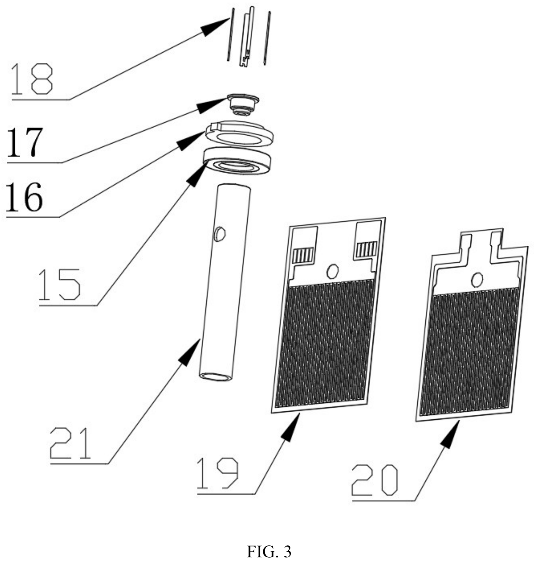

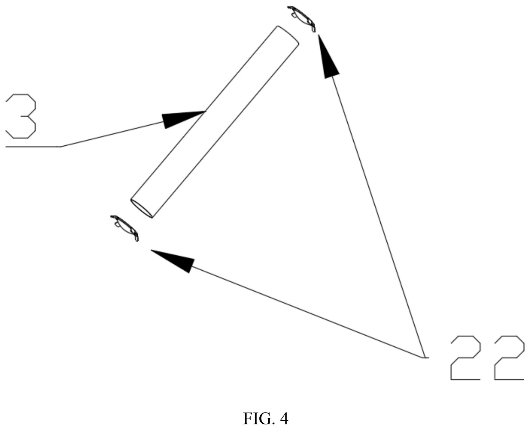

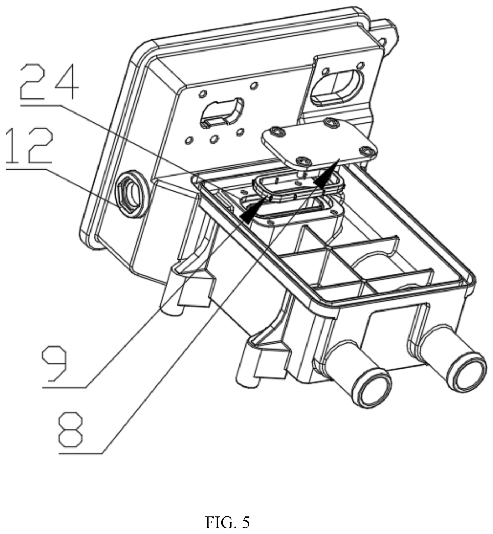

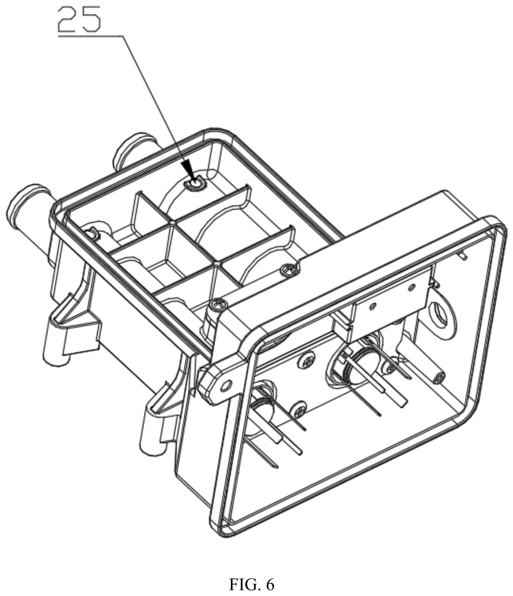

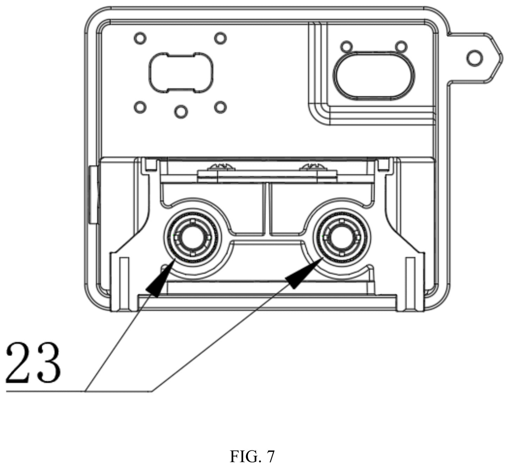

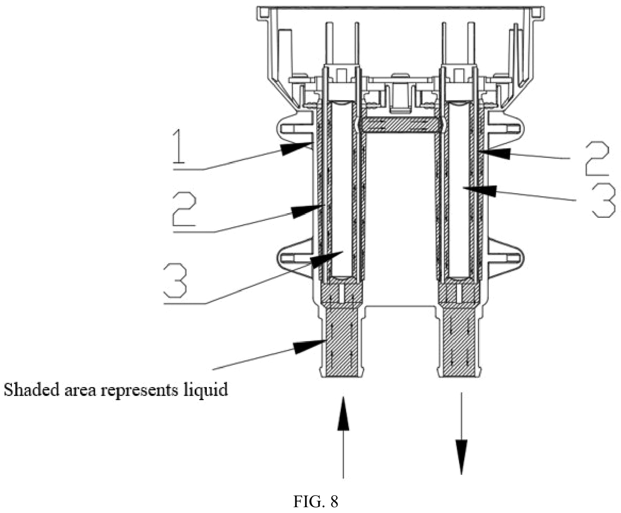

As shown in FIG. 1 to FIG. 8, a high-voltage liquid nano-ceramic electric heater for an automobile according to an embodiment of this disclosure includes a housing 1, where symmetrically arranged heating bodies 2 are arranged at a bottom inside the housing 1, a circular tube 3 is arranged inside each heating body 2, one end of each heating body 2 is connected to the housing 1, a first sealing ring 4 is arranged at a joint between the housing 1 and the heating body 2, an integrated controller 5 electrically connected to the heating body 2 is arranged inside the housing 1, an insulating heat-conducting sheet 6 for heat dissipation is arranged on the integrated controller 5, a first pressing block 7 for fixing the heating body 2 is arranged on the housing 1, a second pressing block 8 is arranged at a top opening inside the housing 1, a second sealing ring 9 is arranged at the bottom of the second pressing block 8, a low-voltage connector 10 and a high-voltage connector 11 are respectively arranged on one side of the housing 1 and above the second pressing block 8, a waterproof and breathable valve 12 is arranged on a side portion of the housing 1, a temperature sensor 13 is arranged inside the housing 1 and above the heating body 2, and a cover plate 14 is arranged on both the top and one side of the housing 1.

### Embodiment II:

As shown in FIG. 1 to FIG. 8, the heating body 2 includes a ceramic tube 21, a flange plate 15 is arranged at an end portion of the ceramic tube 21, a positioning member 16 is arranged on the flange plate 15, a sealing member 17 for sealing is arranged on the positioning member 16, and an electrode 18 connected to the integrated controller 5 is arranged on the ceramic tube 21; a temperature-sensitive substrate 19 is sleeved on an outer surface of the ceramic tube 21, a heating substrate 20 is sleeved on an outer surface of the temperature-sensitive substrate 19, and surfaces of both the temperature-sensitive substrate 19 and the heating substrate 20 are printed with tungsten slurry or other metals; and the circular tube 3 is located in a stainless steel circular tube, fixing pieces 22 for fixing are arranged at both ends of the circular tube, and the fixing pieces 22 are of a quincunx-shaped structure. Tungsten paste or other metals are printed on the surface of the temperature-sensitive substrate 19 (the integrated controller 5 can collect the resistance of the temperature-sensitive substrate and control the temperature of the heating tube through an algorithm, eliminating the need for an additional temperature controller).

### Embodiment III:

As shown in FIG. 1 to FIG. 8, a water channel 23 for accommodating the heating body 2 is arranged inside the housing 1, a mounting hole 24 matched with the second pressing block 8 is arranged at a top opening of the water channel 23, and the second pressing block 8 is connected to the water channel 23 through a bolt; and a blind hole 25 for the temperature sensor 13 to extend into is formed at the top of the water channel 23, and a reinforcing rib is arranged on the housing 1.

In conclusion, by means of the above technical solutions of this disclosure, the liquid flows rapidly over a surface of the heating body 2 when passing through the water channel, achieving efficient heat exchange; a blind hole 25 is arranged on the water channel 23 for placing a temperature sensor 13, and a liquid temperature and the heating body 2 are collected; a reinforcing rib can reduce noise generated by liquid circulation; and the arrangement of a waterproof and breathable valve 12 can release pressure generated during operation of the heater.

The above are only preferred embodiments of this disclosure, and are not intended to limit this disclosure. Any modifications, equivalent substitutions, and improvements made within the spirit and principles of this disclosure should fall within the protection scope of this disclosure.

## Claims

1. A high-voltage liquid nano-ceramic electric heater for an automobile, **characterized by** comprising a housing (1), wherein symmetrically arranged heating bodies (2) are arranged at a bottom inside the housing (1), a circular tube (3) is arranged inside each heating body (2), one end of each heating body (2) is connected to the housing (1), a first sealing ring (4) is arranged at a joint between the housing (1) and the heating body (2), an integrated controller (5) electrically connected to the heating body (2) is arranged inside the housing (1), an insulating heat-conducting sheet (6) for heat dissipation is arranged on the integrated controller (5), a first pressing block (7) for fixing the heating body (2) is arranged on the housing (1), a second pressing block (8) is arranged at a top opening inside the housing (1), a second sealing ring (9) is arranged at the bottom of the second pressing block (8), a low-voltage connector (10) and a high-voltage connector (11) are respectively arranged on one side of the housing (1) and above the second pressing block (8), a waterproof and breathable valve (12) is arranged on a side portion of the housing (1), a temperature sensor (13) is arranged inside the housing (1) and above the heating body (2), and a cover plate (14) is arranged on both the top and one side of the housing (1).

2. The high-voltage liquid nano-ceramic electric heater for an automobile according to claim 1, **characterized in that** the heating body (2) comprises a ceramic tube (21), a flange plate (15) is arranged at an end portion of the ceramic tube (21), a positioning member (16) is arranged on the flange plate (15), a sealing member (17) for sealing is arranged on the positioning member (16), and an electrode (18) connected to the integrated controller (5) is arranged on the ceramic tube (21).

3. The high-voltage liquid nano-ceramic electric heater for an automobile according to claim 2, **characterized in that** a temperature-sensitive substrate (19) is sleeved on an outer surface of the ceramic tube (21), a heating substrate (20) is sleeved on an outer surface of the temperature-sensitive substrate (19), and surfaces of both the temperature-sensitive substrate (19) and the heating substrate (20) are printed with tungsten slurry or other metals.

4. The high-voltage liquid nano-ceramic electric heater for an automobile according to claim 1, **characterized in that** the circular tube (3) is located in a stainless steel circular tube, fixing pieces (22) for fixing are arranged at both ends of the circular tube, and the fixing pieces (22) are of a quincunx-shaped structure.

5. The high-voltage liquid nano-ceramic electric heater for an automobile according to claim 1, **characterized in that** a water channel (23) for accommodating the heating body (2) is arranged inside the housing (1), a mounting hole (24) matched with the second pressing block (8) is arranged at a top opening of the water channel (23), and the second pressing block (8) is connected to the water channel (23) through a bolt.

6. The high-voltage liquid nano-ceramic electric heater for an automobile according to claim 5, **characterized in that** a blind hole (25) for the temperature sensor (13) to extend into is formed at the top of the water channel (23), and a reinforcing rib is arranged on the housing (1).
